(19) Europäisches Patentamt
European Patent Office
Office européen des brevets

(11) **EP 2 793 425 B1**

(12) **FASCICULE DE BREVET EUROPEEN**

(45) Date de publication et mention
de la délivrance du brevet:
**29.06.2016 Bulletin 2016/26**

(51) Int Cl.:
***H04L 9/08*** (2006.01)

(21) Numéro de dépôt: **14161822.3**

(22) Date de dépôt: **26.03.2014**

(54) **Procédé et système pour déterminer un bruit de photon dans des dispositifs de communication optique**

Verfahren und System zur Ermittlung eines Photonenrauschens in optischen Kommunikationsvorrichtungen

Method and system for determining photon noise in optical communication devices

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2013 FR 1353568**

(43) Date de publication de la demande:
**22.10.2014 Bulletin 2014/43**

(73) Titulaire: **Sequrenet**
**75015 Paris (FR)**

(72) Inventeurs:
• **Kunz-Jacques, Sébastien**
**75013 PARIS (FR)**
• **Jouguet, Paul**
**75013 Paris (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A1- 2 879 381**      **US-A1- 2004 109 564**
**US-A1- 2008 095 544**

• **HORACE P. YUEN ET AL: "Noise in homodyne and heterodyne detection", OPTICS LETTERS, vol. 8, no. 3, 1 mars 1983 (1983-03-01), page 177, XP055092811, ISSN: 0146-9592, DOI: 10.1364/OL.8.000177**

**Description**

L'objet de l'invention concerne un procédé et un système pour déterminer l'intensité d'un bruit de photon dans des dispositifs de communication optiques cohérents limités au bruit quantique, et plus particulièrement les dispositifs de distribution quantique de clés à variables continues.

L'invention s'applique notamment dans les systèmes de distribution quantique de clés de cryptage à variables continues tels que ceux décrits dans le brevet EP 1 825 633.

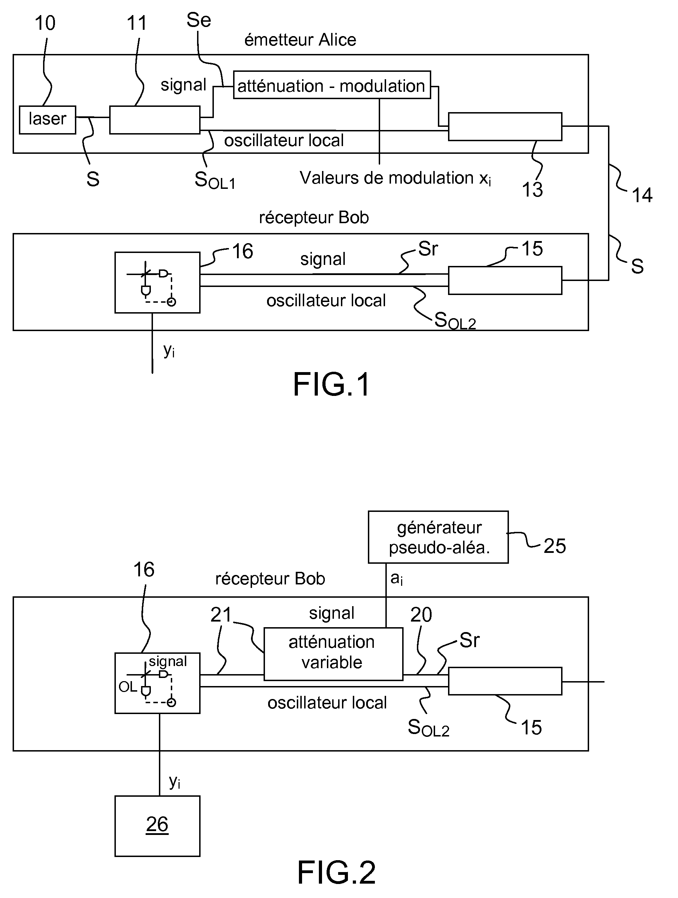

Dans les deux familles précitées, le matériel optique est constitué d'un émetteur et d'un récepteur usuellement appelés Alice et Bob. La figure 1 représente les différents blocs d'un système de communication cohérente en régime quantique. Du côté du dispositif émetteur, Alice, une source laser 10 fournit des impulsions de lumière cohérentes et dans un état cohérent au sens de la mécanique quantique. La source comprend typiquement une source de lumière, telle qu'un laser continu, de grande pureté spectrale, typiquement quelques Mégahertz fournissant un faisceau de lumière polarisée et un modulateur d'amplitude fonctionnant à cadence élevée. Le faisceau lumineux est découpé à haute cadence en des impulsions de lumière intense. Le laser est séparé au moyen d'un séparateur 11 en un premier signal intense $S_{OL1}$, l'oscillateur local qui est une référence de phase, et en un deuxième signal Se fortement atténué et modulé en phase et/ou en amplitude, 12, à l'aide des valeurs choisies par le dispositif quantique : le signal quantique. Le signal $S_{OL1}$ et le signal Se sont ensuite multiplexés par un module de multiplexage 13 afin qu'ils puissent se propager en un signal S, à travers le canal quantique 14, sans interférer. Au niveau du récepteur Bob, le signal reçu S est dé multiplexé par un dispositif de démultiplexage 15, pour produire un quatrième signal, signal oscillateur local $S_{OL2}$ correspondant au premier signal oscillateur local et d'un cinquième signal $S_r$ entaché de bruit quantique du fait de sa propagation dans le canal et correspondant au signal $S_e$. Un détecteur cohérent 16 reçoit les deux signaux $S_{OL2}$, $S_r$. La détection cohérente exploite une amplification du signal dans le domaine optique provoquée par l'interférence du signal avec la référence de phase intense, les résultats des mesures sont notés $y_i$. La détection cohérente est une détection homodyne éventuellement associée à un dispositif de sélection de la quadrature mesurée, par exemple, un modulateur de phase sur la voie oscillateur local ou la voie signal, ou une détection hétérodyne constituée de deux détections homodynes mesurant simultanément deux quadratures du signal, après séparation du signal et de l'oscillateur local.

Avec un tel système, la mesure de quadratures du signal reçu par Bob comporte inévitablement un bruit d'origine quantique : le bruit de photon. Celui-ci correspond aux fluctuations statistiques du nombre de photons détectés d'une fois sur l'autre lorsque l'on répète la même mesure. Sa variance est proportionnelle à la puissance $P_{OL}$ de l'oscillateur local. Lorsque les niveaux de signaux mesurés sont d'ordres de grandeurs comparables avec le bruit de photon, la comparaison du bruit mesuré avec le bruit de photon fournit une indication de la performance du système : si le bruit total mesuré est proche du bruit de photon, la détection ajoute elle-même très peu de bruit. La connaissance de cette grandeur présente donc un intérêt dans le cadre général des communications quantiques.

Dans le cas de la distribution quantique de clés à variables continues, telle que décrite dans le brevet EP 1 825 633 ou dans la demande de brevet US 2004/0109564, le dispositif de la figure 1 est conçu afin de n'ajouter qu'une quantité de bruit très petite devant le bruit de photon. Les procédés de distribution quantique de clés permettent à Alice et à Bob de s'échanger un secret. Les valeurs transmises entre Alice et Bob sont transformées par plusieurs traitements algorithmiques en une valeur binaire qui n'est connue que d'Alice et de Bob, quelle que soit l'action d'une tierce partie, désignée l' « attaquant » sur le chemin optique qui les relie. Cette valeur binaire transmise est usuellement appelée « clé ». La garantie de secret de la clé est déduite des lois de la physique. La quantité de secret obtenue, la taille de la clé par exemple, ne peut cependant être évaluée sans une connaissance précise du bruit de photon ainsi que du bruit mesuré sur le signal reçu. L'excès de bruit, qui est la différence entre ces deux quantités, après prise en compte des imperfections éventuelles des dispositifs d'émission et de réception, trahit la présence d'un attaquant « écoutant » sur la ligne ou intervenant, agissant sur le canal quantique 14 pour en extraire des informations. Dans ce contexte, la connaissance précise du bruit de photon sur une détection homodyne ou sur chaque détection homodyne dans un dispositif homodyne est cruciale.

L'art antérieur décrit plusieurs techniques pour effectuer la mesure du bruit de photon. Par exemple, une technique indirecte consiste à mesurer le signal constituant une référence de phase, l'oscillateur local. Avec une détection homodyne résolue au bruit de photon, il existe en effet une relation affine entre l'intensité $I_{OL}$ de l'oscillateur local et la variance du bruit de photon Vbp, relation qui peut être caractérisée lors d'une étape de calibration du dispositif préalable à son utilisation en conditions réelles. Il suffit pour cela de débrancher l'une des voies d'entrée du coupleur 50/50 de la détection, cette voie correspond ainsi au mode vide, et d'injecter l'oscillateur local intense dans l'autre voie du coupleur. En faisant varier l'intensité de l'oscillateur on en déduit la pente de la relation entre la valeur du bruit de photon Vdp et la puissance $P_{OL}$ de l'oscillateur local. L'ordonnée à l'origine de cette droite correspond au bruit électronique intrinsèque de la détection homodyne.

Malgré les avantages qu'elle présente, cette méthode de mesure de bruit de photon présente deux inconvénients majeurs :

- la relation entre l'intensité de l'oscillateur local et la variance du bruit de photon ne peut être établie avec la précision suffisante pour garantir une connaissance assez précise du bruit de photon en fonctionnement. L'utilisation d'une relation précalibrée ne permet pas de tenir compte des dérives des dispositifs de mesure, liées par exemple à la température ou au vieillissement des composants du dispositif ;
- cette relation est également influençable par une intervention sur la ligne entre l'émetteur Alice et le récepteur Bob. Cette possibilité dépend des détails de la mise en oeuvre du récepteur Bob. Par exemple, lorsque Bob reconstitue à partir du signal optique intense de l'oscillateur local, un signal électronique utilisé ensuite comme une référence temporelle pour ses mesures, la manipulation de l'oscillateur local (signal classique) lors de son trajet entre Alice et Bob peut aboutir à un décalage du signal d'horloge, qui a une influence directe sur la relation entre l'intensité de l'oscillateur local et la variance du bruit de photon.

La méthode ne permet donc pas une évaluation précise du bruit de photon, particulièrement en présence d'une tierce partie cherchant à fausser cette mesure. Elle se révèle inadéquate dans tout contexte où une mesure précise est requise, et plus particulièrement dans le contexte de la distribution quantique de clés à variables continues.

Dans les dispositifs à distribution quantique de clés à variables continues, pour évaluer le taux de clé final produit, il est de plus nécessaire de s'assurer qu'une proportion significative du signal jouant le rôle de l'oscillateur local chez Bob a bien été émise par l'Alice et qu'il ne s'agit pas d'un signal injecté dans le système par un tiers « attaquant » ou parasite. En effet, l'ajout d'un oscillateur local autre que celui d'Alice, provoquant une baisse de visibilité sur l'interféromètre des dispositifs de détection, occasionne une augmentation de l'estimation du bruit de photon chez Bob et l'augmentation par la même quantité du terme de bruit estimé en unités de bruit de photon, qui est égal au rapport des deux quantités précédentes et qui constitue la quantité utilisée dans les calculs de quantité de secret. La précision requise n'est pas aussi élevée que pour la problématique de la mesure de l'excès de bruit, car un éventuel signal ajouté dans l'oscillateur local de Bob influencera aussi bien la mesure du bruit sur le signal que la mesure du bruit de photon et n'affectera donc pas la mesure de l'excès de bruit du signal autrement que lors de la conversion en unités de bruit de photon de celui-ci. En conséquence, une erreur multiplicative d'un facteur y sur la mesure du bruit de photon provoquée par l'ajout d'un signal dans l'oscillateur local provoquera une erreur multiplicative d'un facteur 1/y, donc du même ordre, sur l'excès de bruit.

Le document de Horace P.Yuen et al, intitulé « Noise in homodyne and heterodyne détection» OPTICS LETTERS, vol.8,n°3, 1 mars 1983, page 177, XP055092811, ISSN :0146-9592, décrit un procédé d'analyse de bruit dans les détections homodyne et hétérodyne.

Un des objectifs de la présente invention est de fournir un procédé et un système permettant d'effectuer de façon directe une mesure du bruit de photon sur une détection homodyne ou hétérodyne alors que le dispositif est en cours de fonctionnement.

Dans la suite de la description, on désigne par « voie oscillateur local » ou oscillateur local, le signal intense qui est la référence de phase et par « voie signal » ou signal le signal quantique.

L'invention concerne un procédé pour déterminer en temps réel une valeur de bruit de photon dans des dispositifs de communication optiques cohérents comprenant au moins un émetteur Alice et au moins un récepteur Bob, l'émetteur Alice transmettant les impulsions du signal S et un oscillateur local $S_{OL}$ à Bob, ledit oscillateur local servant de référence de phase par rapport à laquelle la phase du signal est définie, les impulsions oscillateur local étant grandes devant les impulsions signal, ledit récepteur comprenant au moins un détecteur cohérent, le procédé est caractérisé en ce qu'il comporte au moins les étapes suivantes : Au niveau du récepteur Bob

- effectuer par détection cohérente, pour plusieurs impulsions, des mesures de bruit pour des impulsions du signal $S_r$ connu de Bob atténué au niveau du récepteur Bob pour au moins deux rapports d'atténuation, une première valeur $a_1$ et une deuxième valeur d'atténuation $a_2$,
- regrouper les mesures selon le rapport d'atténuation $a_1$, $a_2$ qui leur est appliqué pour former au moins deux groupes $G_k$, k=1,2, calculer les variances du bruit mesuré $Vbm_k$ des mesures sur ces groupes avec $Vbm_k$ égale à la somme de la variance bruit signal égale à $Vbs* a_k$ et de la variance bruit de photon égale à $Vbp$, et déterminer la variance du bruit de signal $Vbs$ et la variance du bruit de photon $Vbp$, à partir des variances $Vbm_k$ des mesures sur ces groupes $G_k$.

Selon une variante de réalisation on utilise deux rapports d'atténuation $a_1$ et $a_2$ et on calcule $Vbs$ et $Vbp$, en utilisant :

$$Vbs = (Vbm_2 - Vbm_1) / (a_2 - a_1)$$

$$Vbp = Vbm_1 - Vbs * a_1$$

avec $Vbm_1$ la variance du bruit pour le premier groupe atténué avec $a_1$ et $Vbm_2$ pour la variance du bruit pour l'atténuation $a_2$.

Les valeurs d'atténuation peuvent être choisies de la manière suivante $a_1=1$ et $a_2 = ½$ ou $a_1=1$ et $a_2=0$.

Chaque impulsion $I_i$ du signal Sr est, par exemple, atténuée d'un facteur $x_i = a_1$ ou $a_2$ dans le récepteur Bob en utilisant un module d'atténuation variable de signal qui reçoit le facteur d'atténuation $x_i$ à appliquer.

Pour la génération des facteurs d'atténuation, on utilise, par exemple, un générateur pseudo-aléatoire cryptographique utilisant une valeur secrète afin de générer les facteurs d'atténuation $a_i$ du signal Sr et/ou un générateur physique d'aléa.

Selon une variante, le procédé comporte, par exemple, les étapes suivantes :

- on sépare l'oscillateur local $S_{OL2}$ reçu par le récepteur Bob en une première impulsion $I_i$ et une deuxième impulsion $I_i'$ à laquelle on applique un retard $\tau$,
- on effectue une première série de mesures de bruit à partir des impulsions $I_i$ d'oscillateur local et du signal Sr,
- on effectue une deuxième série de mesures de bruit à partir des impulsions retardées $R_i$ d'oscillateur local qui interfère avec le vide,
- à partir de ces deux séries de mesure on détermine la valeur du bruit de photon.

Selon une autre variante de réalisation, le procédé comporte, par exemple, les étapes suivantes :

- on découpe le signal oscillateur local $S_{OL2}$ en une première fraction $P_1$ et une deuxième fraction $P_2$, avec $P_1 + P_2=1$,
- on effectue à l'aide d'une première détection cohérente recevant le signal une première série de mesure de bruit $y_i$ à partir de la première fraction $P_1$ et du signal Sr,
- on effectue à l'aide d'une seconde détection homodyne une deuxième série de mesure de bruit $z_i$ à partir de la deuxième fraction $P_2$,
- à partir de ces deux séries de mesure on détermine la valeur du bruit de photon.

Les valeurs $y_i$ peuvent être obtenues par une première détection homodyne caractérisée par une efficacité e, et les valeurs $z_i$ correspondant au bruit de photon Vbp' par une deuxième détection homodyne avec une efficacité e' et on détermine la valeur du bruit de photon Vpb ramené à la première détection homodyne avec $Vbp = e/e'*P_1/P_2*Vbp'$.

L'invention concerne aussi un système pour déterminer en temps réel une valeur de bruit de photon dans des dispositifs de communication optiques cohérents comprenant au moins un émetteur Alice et au moins un récepteur Bob, l'émetteur Alice transmettant les impulsions du signal Se et d'un oscillateur local $S_{OL}$ à Bob, ledit oscillateur local servant de référence de phase par rapport à laquelle la phase du signal est définie, les impulsions oscillateur local étant grandes devant les impulsions signal, ledit récepteur Bob comprenant au moins un détecteur cohérent, caractérisé en ce qu'il comporte au moins les éléments suivants :

- un moyen d'atténuation adapté à atténuer le signal reçu $S_r$ par le récepteur Bob avec au moins deux rapports d'atténuation connus, une première valeur $a_1$ et une deuxième valeur $a_2$ variable selon l'impulsion, et
- un moyen de traitement des mesures effectuées par au moins le détecteur cohérent, ledit moyen de traitement est adapté à exécuter a moins les étapes suivantes : regrouper les mesures selon le rapport d'atténuation $a_1$, $a_2$ qui leur est appliqué pour former au moins deux groupes $G_k$, k=1,2, calculer les variances $Vbm_k$ des mesures sur ces groupes avec $Vbm_k$ égale à la somme de la variance bruit signal égale à $Vbs* a_k$ et de la variance bruit de photon égale à Vbp, et déterminer la variance du bruit de signal Vbs et la variance du bruit de photon Vbp, à partir des variances $Vbm_k$ des mesures sur ces groupes $G_k$

Le rapport d'atténuation du signal Sr est, par exemple, un moyen d'atténuation variable recevant les ordres d'atténuation à des instants aléatoires.

Il est possible d'utiliser comme moyen d'atténuation aléatoire du signal Sr un générateur pseudo-aléatoire cryptographique et/ou un générateur physique d'aléa.

Le système peut comporter un premier moyen de séparation du signal oscillateur $S_{OL2}$ en un premier signal $I_i$ et un deuxième signal $I_i'$, un dispositif adapté à introduire un retard $\tau$ au deuxième signal $I_i'$ pour générer $R_i$, un deuxième coupleur ayant une sortie reliée au détecteur cohérent.

Le système peut comporter un moyen de séparation du signal oscillateur local en une première fraction $P_1$ et une deuxième fraction $P_2$, une première sortie dudit dispositif étant reliée au détecteur cohérent et une deuxième sortie dudit dispositif étant reliée à un deuxième détecteur cohérent ayant la ligne de signal non connectée.

Le détecteur cohérent est, par exemple, un détecteur homodyne.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, un schéma d'un système selon l'art antérieur,
- La figure 2, un premier exemple de réalisation du procédé de mesure selon l'invention,
- La figure 3A, un exemple de système comprenant une ligne à retard sur la voie oscillateur local, et la figure 3B, le séquencement correspondant, et
- La figure 4, une variante comportant un deuxième détecteur cohérent.

Les exemples qui vont être explicités dans la suite de la description concernent des systèmes et des procédés permettant d'effectuer de manière directe une mesure du bruit de photon sur une détection cohérente, par exemple une détection homodyne, alors que le dispositif de réception du signal est en cours de fonctionnement.

La mesure d'un signal par détection cohérente correspond à l'interférence sur une lame séparatrice de rapport de couplage équilibré 50/50, entre un oscillateur local qui constitue une référence de phase pour le signal et le signal. Après le coupleur, le dispositif permettant de mesurer le résultat des interférences entre l'oscillateur local et le signal est, par exemple, une détection homodyne équilibrée. Chacune des deux voies est reliée à une photodiode et la différence des photocourants produits par les photodiodes est amplifiée par un montage amplificateur de charge connu de l'Homme du métier. La quadrature du signal mesurée est sélectionnée par exemple à l'aide d'un modulateur de phase agissant sur le signal ou sur l'oscillateur local. Alternativement, le dispositif de mesure peut être une détection hétérodyne constituée de deux détections homodynes. Dans ce cas, l'oscillateur local et le signal sont préalablement chacun amenés sur des lames séparatrices 50/50 et chaque moitié d'oscillateur local interfère sur une lame séparatrice 50/50 avec une moitié de signal, la longueur des chemins optiques assurant que les signaux ont, lors de leur interférence, un déphasage relatif de 90 degrés. Ainsi deux quadratures orthogonales du signal sont mesurées simultanément.

La mesure du bruit quantique, ou bruit de photon, correspond à l'évaluation de la variance des mesures cohérentes du signal vide: il s'agit du dispositif de mesure cohérente décrit ci-dessus en l'absence de signal. Une détection hétérodyne peut être employée mais une détection homodyne suffit pour cette mesure.

Dans le cas d'un dispositif de mesure cohérente dit résolu au bruit de photon, la détection homodyne employée, ou les détections homodynes employées dans le cas hétérodyne, ont, la caractéristique que la variance du bruit de photon est une fonction affine de la puissance de l'oscillateur local, l'ordonnée à l'origine de cette relation étant le bruit intrinsèque du dispositif de détection.

Les éléments identiques dans les différentes figures portent les mêmes références.

La figure 2 représente un premier exemple de procédé et de système selon l'invention qui permet de mesurer le bruit de photon lorsque la même détection homodyne est employée pour mesurer le signal et le bruit de photon, et qu'un rapport d'atténuation $a_i$ est appliqué à l'impulsion d'indice i sur la voie signal.

Le procédé s'applique au niveau du récepteur Bob (figure 1). Sur la voie 20 du signal $S_r$, on dispose un module d'atténuation 21 du signal reçu Sr par le récepteur Bob permettant d'appliquer des rapports d'atténuation connus et variant d'impulsion en impulsion. Le module d'atténuation 21 a notamment pour fonction d'atténuer le signal, voire l'annuler, à des moments imprévisibles par un éventuel attaquant.

Plusieurs valeurs d'atténuation sont utilisées, allant de 1 (le signal est inchangé) à 0 (aucun signal n'est transmis). Les impulsions reçues sont alors classées par groupe correspondant au rapport d'atténuation utilisé.

Par exemple, on utilise deux groupes d'atténuation, correspondant à l'atténuation $a_1$, et à l'atténuation $a_2$. On classe une impulsion $I_i$ dans l'un des deux groupes $G_1$, $G_2$ en fonction de la valeur d'atténuation $a_1$ ou $a_2$ appliquée à l'impulsion $I_i$.

Sur un groupe $G_k$ d'impulsions pour lesquelles la voie signal est atténuée d'un facteur $x = a_k$, la variance du bruit mesuré $Vbm_k$ est égale à :

$$\text{(variance bruit signal} = Vbs) * a_k + \text{(variance bruit de photon} = Vbp).\text{ La}$$

La connaissance de cette quantité $Vbm_k$ pour au moins deux valeurs de facteur d'atténuation $a_1$, $a_2$, et pour plusieurs impulsions, permet d'isoler par le calcul les termes de la variance du bruit du signal Vbs (variance bruit signal) et de la variance du bruit de photon Vbp. Pour effectuer le calcul de Vbs et de Vbp, dans le cas de l'emploi de deux rapports d'atténuation, on peut par exemple écrire le système linéaire :

$$Vbm_1 = Vbs * a_1 + Vbp$$

$$Vbm_2 = Vbs * a_2 + Vbp$$

Un système de traitement 26 connecté au dispositif optique (récepteur Bob), par exemple un PC, reçoit les résultats des mesures $y_i$, et les rapports d'atténuation correspondants $x_i$ valant $a_1$ ou $a_2$, regroupe les mesures selon le rapport d'atténuation qui leur est appliqué pour former les groupes $G_k$, calcule les variances des mesures $Vbm_k$ sur ces groupes, et calcule Vbs et Vbp, par les formules :

$$Vbs = (Vbm_2 - Vbm_1) / (a_2 - a_1)$$

$$Vbp = Vbm_1 - Vbs * a_1$$

qui correspondent à l'inversion du système linéaire précédent, puis dans le cadre d'une application à la distribution quantique de clé l'excès de bruit égal à la quantité Vbs - Vbp.

Il est possible de prendre $a_1=1$ et $a_2 = \frac{1}{2}$ ou $a_1=1$ et $a_2=0$ comme facteur d'atténuation.

Selon une variante de réalisation, pour chaque impulsion reçue par Bob, on va choisir la valeur du rapport d'atténuation à appliquer au moyen d'un générateur pseudo-aléatoire cryptographique 25 utilisant une valeur secrète pour garantir que les valeurs produites ne puissent être distinguées de valeurs aléatoires, un générateur d'aléa physique produisant de l'aléa vrai ou une combinaison quelconque de ces deux types de générateurs d'aléa.

L'atténuation variable permet, notamment, de détecter la dépendance du bruit en l'intensité du signal et de là de séparer le bruit de photon des bruits ayant une autre origine. En utilisant un caractère imprévisible pour l'atténuation le procédé et le système préviennent d'un comportement adaptatif qui serait en mesure de fausser cette relation. Cela est particulièrement utile lorsque l'atténuation appliquée est limitée, pour des raisons techniques liées au dispositif d'atténuation. Dans ce cas, un facteur d'atténuation prévisible peut être compensé par un attaquant qui enverrait un signal d'une intensité calculée pour obtenir la puissance voulue après atténuation. Au contraire, l'utilisation d'aléa permet d'obtenir une mesure de bruit de photon fiable avec une atténuation très faible, de seulement 3dB par exemple.

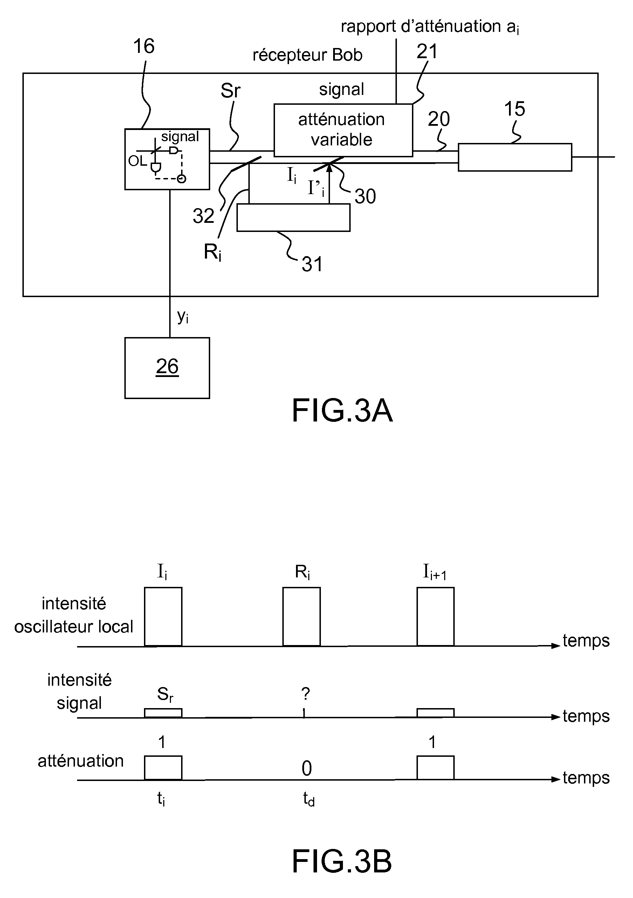

La figure 3A schématise une variante de réalisation dans laquelle, le système utilise la même détection que pour la voie signal. La détection employée fonctionne à une fréquence double de celle des signaux entrants, ce qui conduit à préserver la performance du système.

Pour cela le système comprend un premier coupleur 30 sur la voie oscillateur local, une ligne à retard 31 et un deuxième coupleur 32. L'oscillateur local est séparé au niveau du premier coupleur 30 en deux impulsions $I_i$, $I'_i$, la deuxième impulsion $I'_i$ passant par la ligne à retard 31 alors que la première impulsion $I_i$ va directement sur le détecteur sans subir de retard.

La voie signal comporte un module 21 permettant d'appliquer des rapports d'atténuation connus et variant d'impulsion en impulsion sur le signal reçu $S_r$ pendant une durée $t_a$ égale à la durée t des impulsions signal ou oscillateur local entrant dans le système et à partir d'un moment $t_d$ correspondant, par exemple, au début de l'arrivée au niveau du détecteur homodyne 16 d'une impulsion oscillateur local $R_i$ ayant traversé la ligne à retard 31. L'atténuation variable est effectuée, par exemple, au moyen du modulateur d'amplitude ou d'un interrupteur optique.

Au niveau du détecteur homodyne 16, $t_i$ correspond au moment d'arrivée du signal $S_r$ et de l'impulsion $I_i$ non retardée et permet ainsi une première série de mesure selon les valeurs de rapports d'atténuation comme il a été décrit à la figure 2.

Lors de l'arrivée $t_r$ de la seconde impulsion $R_i$ d'oscillateur local au niveau du détecteur cohérent 16, dans l'exemple donné, la valeur 0 indique que la voie signal est coupée et donc qu'aucune impulsion signal ne va arriver au niveau du détecteur. Le détecteur mesure donc l'interférence de l'oscillateur local et du vide ce qui fournit une valeur de bruit de photon Vbp. Le détecteur effectue plusieurs mesures correspondant à une atténuation totale du signal dans cet exemple. Il serait aussi possible au lieu d'appliquer une atténuation totale du signal, d'utiliser une atténuation de valeur connue.

Le système va ensuite déterminer, en appliquant la méthode décrite à la figure 2, la variance du bruit mesuré à partir de ces deux séries de mesure.

La figure 3B représente sur trois axes temporels, en partant du haut vers le bas, l'amplitude d'une impulsion $I_i$, de l'impulsion retardée $R_i$, de l'impulsion $I_{i+1}$, puis l'intensité du signal $S_r$, et l'atténuation choisie 1 ou 0 dans cet exemple, 0 garantit par exemple une atténuation totale.

Les impulsions retardées et non retardées constituent deux groupes d'impulsions avec des rapports d'atténuation constants à l'intérieur de ces groupes. Comme dans le cas sans ligne à retard, un dispositif de calcul 26 connecté au dispositif optique (récepteur Bob) détermine ces deux variances $Vbm_1$, $Vbm_2$ à partir des résultats $y_i$ des mesures. Ces variances sont ensuite combinées avec les rapports d'atténuation $a_k$ pour former le système :

$$Vbm_1 = Vbs * a_1 + Vbp$$

$$Vbm_2 = Vbs * a_2 + Vbp$$

qui est résolu pour extraire Vbs et Vbp.

Selon une variante de réalisation, il est possible de moduler le rapport d'atténuation par un facteur imprévisible, afin de mesurer la corrélation entre le niveau d'atténuation imposé et la variance du bruit de photon mesuré. Ceci permet notamment d'augmenter la sécurité du système de mesure et d'éviter une intrusion de la part d'un éventuel attaquant.

L'avantage de cette deuxième variante est qu'elle permet une mesure pour chaque impulsion par rapport à la mise en oeuvre du système de la figure 2, donc à une fréquence double. Elle permet, en utilisant la même détection pour le signal et le bruit de photon d'éviter les biais de mesure liés aux différences physiques entre deux dispositifs de détection homodyne distincts.

Dans les variantes décrites aux figures 2 et 3A, l'atténuation nécessaire sur la voie signal peut être réalisée à l'aide d'un ou de plusieurs modulateurs d'amplitude situés sur la voie signal, d'un ou de plusieurs interrupteurs optiques, ou d'une combinaison de modulateurs optiques et de modulateurs d'amplitude.

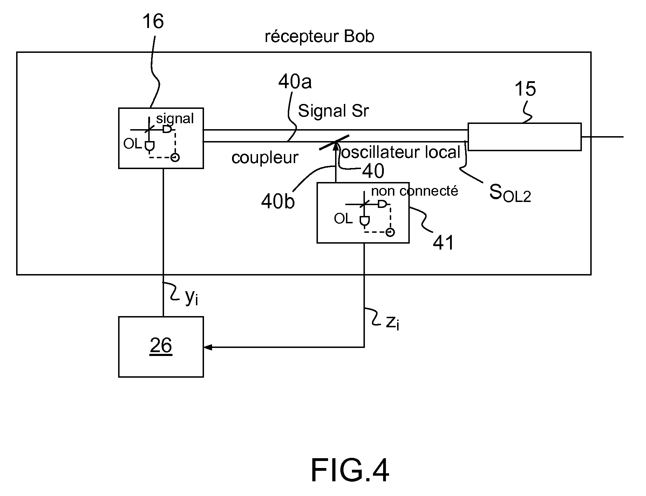

Dans l'exemple donné à la figure 4, l'atténuation du signal va être réalisée grâce à la présence d'un deuxième détecteur cohérent placé sur la voie oscillateur local et dont la voie signal n'est pas connectée.

Le système de mesure comprend sur la voie oscillateur local un coupleur 40 et un deuxième détecteur cohérent 41. Une première voie de sortie 40a du coupleur 40 est connectée à la voie oscillateur local connectée au premier détecteur cohérent 16 qui reçoit aussi le signal Sr. Une deuxième voie de sortie 40b est connectée à au deuxième détecteur cohérent 41 dont la voie signal est non connectée. Une première fraction $P_1$ du signal oscillateur local $S_{OL2}$ va directement vers le premier détecteur cohérent 16 et une deuxième fraction $P_2$ du signal oscillateur local $S_{OL2}$ va vers le deuxième détecteur cohérent 41 dont la voie signal n'est pas connectée, avec $P_1 + P_2 = 1$.

Le premier détecteur cohérent 16 mesure (mesures $y_i$) la variance du bruit mesuré à partir du signal $S_r$ qui n'est pas atténué et de la première fraction $P_1$.

Le deuxième détecteur homodyne 41 réalise une mesure directe du bruit de photon à partir de la fraction du signal $P_2$, valeurs mesurées $z_i$.

Le dispositif de traitement 26 calcule la variance des $z_i$ qui constitue la mesure du bruit de photon Vbp' sur le détecteur homodyne 41. Cette valeur peut être convertie en une valeur du bruit de photon sur le premier détecteur cohérent 16 de la façon suivante. Si le détecteur 16 est une détection homodyne, elle est caractérisée par une efficacité e, de même que le détecteur 41 a une efficacité e'. La variance du bruit de photon ramenée au détecteur 16 est la quantité $Vbp = e/e'*P_1/P_2*Vbp'$. Dans le cas d'un détecteur 16 de type hétérodyne constitué de deux détections homodynes, le bruit de photon $Vbp_1$ et $Vbp_2$ sur chacune de ces deux détections est calculé à l'aide des efficacités $e_1$ et $e_2$ de ces deux détections et de la fraction d'oscillateur local $Q_1$ et $Q_2$, $Q_1 + Q_2 = P_1$, qui leur parvient.

Cette variante permet notamment d'éviter de consommer pour évaluer le bruit de photon, les impulsions de signal permettant de communiquer un signal utile dans le cas d'un dispositif de communication cohérente ou de fabriquer une clé secrète issue du protocole QKD connu de l'Homme du métier.

Selon une dernière variante de réalisation non représentée sur les figures, certaines impulsions du signal sont atténuées par l'émetteur Alice. Le signal atténué transite par le canal de communication vers le récepteur. Pour les impulsions envoyées, Alice envoie par exemple toujours le même état cohérent, par exemple, l'état vide. Dans ce cas et en cas d'absence de comportement adaptatif d'un éventuel intervenant sur le canal, la variance du bruit mesuré par Bob sur ces impulsions est égale à celle du bruit de photon.

Pour les différentes variantes de réalisation décrites ci-dessus, et dans le cas d'une application à la distribution quantique de clé, il est possible au niveau du récepteur de surveiller un ensemble de grandeurs mesurables par le récepteur et d'accepter, pour produire les clés cryptographiques, uniquement les données dont les valeurs sont dans des intervalles compatibles avec l'atténuation du canal quantique 14.

Par exemple, le dispositif de traitement 26 associé au récepteur Bob et au deuxième détecteur, vérifie que les variances du signal Vbs et du bruit de photon Vbp calculées à l'aide des méthodes ci-dessus se trouvent dans des intervalles prédéfinis.

Selon une variante, le procédé va mesurer la valeur de la puissance de l'oscillateur local. Le dispositif de traitement 26 utilise la variance du bruit de photon et la puissance de l'oscillateur local pour vérifier que ces deux quantités sont liées par la droite de réponse du récepteur tracée lors de la calibration du système, (variance des mesures, puissance de l'oscillateur).

La description qui vient d'être donnée dans le cadre d'une mesure de bruit dans un système de distribution quantique de clé peut être mise en oeuvre de manière plus générale pour tout système de communication optique cohérent.

L'invention présente notamment comme avantages d'effectuer une mesure alors que le système est en fonctionnement. Dans certains modes de réalisation, l'invention augmente la difficulté pour un attaquant éventuel toute manipulation de la valeur de ce bruit, ce qui est une qualité nécessaire pour un usage dans le domaine de la distribution quantique de clés à variables continues.

## Revendications

**1.** - Procédé pour déterminer en temps réel une valeur de bruit de photon dans des dispositifs de communication optiques cohérents comprenant au moins un émetteur Alice et au moins un récepteur Bob, l'émetteur Alice transmettant les impulsions du signal S et un oscillateur local $S_{OL}$ à Bob, ledit oscillateur local servant de référence de phase par rapport à laquelle la phase du signal est définie, les impulsions oscillateur local étant grandes devant les impulsions signal, ledit récepteur comprenant au moins un détecteur cohérent (16), **caractérisé en ce qu'**il comporte au moins les étapes suivantes,
au niveau du récepteur Bob :

- effectuer par détection cohérente, pour plusieurs impulsions, des mesures de bruit pour des impulsions du signal $S_r$ connu du récepteur Bob et atténué au niveau du récepteur Bob pour au moins deux rapports d'atténuation, une première valeur $a_1$ et une deuxième valeur d'atténuation $a_2$,
- regrouper les mesures selon le rapport d'atténuation $a_1$, $a_2$ qui leur est appliqué pour former au moins deux groupes $G_k$, k=1,2, calculer les variances du bruit mesuré $Vbm_k$ des mesures sur ces groupes avec $Vbm_k$ égale à la somme de la variance bruit signal égale à $Vbs* a_k$ et de la variance bruit de photon égale à $Vbp$, et déterminer la variance du bruit de signal $Vbs$ et la variance du bruit de photon $Vbp$, à partir des variances $Vbm_k$ des mesures sur ces groupes $G_k$.

**2.** - Procédé selon la revendication 1 **caractérisé en ce que** l'on utilise deux rapports d'atténuation $a_1$ et $a_2$ et l'on calcule $Vbs$ et $Vbp$, en utilisant :

$$Vbs = (Vbm_2 - Vbm_1) / ( a_2 - a_1)$$

$$Vbp = Vbm_1 - Vbs * a_1$$

avec $Vbm_1$ la variance du bruit pour le premier groupe atténué avec $a_1$ et $Vbm_2$ pour la variance du bruit pour l'atténuation $a_2$.

**3.** - Procédé selon l'une des revendications 1 à 2 **caractérisé en ce que** l'on prend comme valeurs d'atténuation $a_1$=1 et $a_2 = \frac{1}{2}$ ou $a_1$=1 et $a_2$=0.

**4.** - Procédé selon l'une des revendications 1 à 3 **caractérisé en ce que** chaque impulsion $I_i$ du signal Sr est atténuée d'un facteur $x_i = a_1$ ou $a_2$ dans le récepteur Bob en utilisant un module d'atténuation variable de signal qui reçoit le facteur d'atténuation $x_i$ à appliquer.

**5.** - Procédé selon la revendication 4 **caractérisé en ce que** l'on utilise un générateur pseudo-aléatoire cryptographique (25) utilisant une valeur secrète afin de générer les facteurs d'atténuation $x_i$ du signal $S_r$ et/ou un générateur physique d'aléa.

**6.** - Procédé selon l'une des revendications 1 à 3 **caractérisé en ce que** :

- on sépare l'oscillateur local $S_{OL2}$ reçu par le récepteur Bob en une première impulsion $I_i$ et une deuxième

impulsion l'$_i$ à laquelle on applique un retard $\tau$,

• on effectue une première série de mesures de bruit à partir des impulsions l$_i$ d'oscillateur local et du signal S$_r$,

• on effectue une deuxième série de mesures de bruit à partir des impulsions retardées R$_i$ d'oscillateur local qui interfère avec le vide,

• à partir de ces deux séries de mesure on détermine la valeur du bruit de photon.

**7.** - Procédé selon l'une des revendications 1 à 3 **caractérisé en ce que** :

• on découpe le signal oscillateur local S$_{OL2}$ en une première fraction P$_1$ et une deuxième fraction P$_2$, avec P$_1$ + P$_2$=1,

• on effectue à l'aide d'une première détection cohérente recevant le signal une première série de mesure de bruit y$_i$ à partir de la première fraction P$_1$ et du signal S$_r$,

• on effectue à l'aide d'une seconde détection homodyne une deuxième série de mesure de bruit z$_i$ à partir de la deuxième fraction P$_2$,

• à partir de ces deux séries de mesure on détermine la valeur du bruit de photon.

**8.** - Procédé selon la revendication 7 **caractérisé en ce que** l'on détermine les valeurs y$_i$ par une première détection homodyne **caractérisée par** une efficacité e, et les valeurs z$_i$ correspondant au bruit de photon Vbp' par une deuxième détection homodyne avec une efficacité e' et on détermine la valeur du bruit de photon Vpb ramené à la première détection homodyne avec Vbp = e/e'*P$_1$/P$_2$*Vbp'.

**9.** - Système pour déterminer en temps réel une valeur de bruit de photon dans des dispositifs de communication optiques cohérents comprenant au moins un émetteur Alice et au moins un récepteur Bob, l'émetteur Alice transmettant les impulsions du signal Se et d'un oscillateur local S$_{OL}$ à Bob, ledit oscillateur local servant de référence de phase par rapport à laquelle la phase du signal est définie, les impulsions oscillateur local étant grandes devant les impulsions signal, ledit récepteur Bob comprenant au moins un détecteur cohérent (16), **caractérisé en ce qu'**il comporte au moins les éléments suivants :

• un moyen (21) d'atténuation adapté à atténuer le signal reçu S$_r$ par le récepteur Bob avec au moins deux rapports d'atténuation connus, une première valeur a$_1$ et une deuxième valeur d'atténuation a$_2$ variable selon l'impulsion,

• un moyen de traitement (26) des mesures effectuées par au moins le détecteur cohérent, ledit moyen de traitement (26) est adapté à exécuter au moins les étapes suivantes : regrouper les mesures selon le rapport d'atténuation a$_1$, a$_2$ qui leur est appliqué pour former au moins deux groupes G$_k$, k=1,2, calculer les variances Vbm$_k$ des mesures sur ces groupes avec Vbm$_k$ égale à la somme de la variance bruit signal égale à Vbs* a$_k$ et de la variance bruit de photon égale à Vbp, et déterminer la variance du bruit de signal Vbs et la variance du bruit de photon Vbp, à partir des variances Vbm$_k$ des mesures sur ces groupes G$_k$.

**10.** - Système selon la revendication 9 **caractérisé en ce que** le moyen d'atténuation du signal S$_r$ est un moyen d'atténuation variable (21) recevant les ordres d'atténuation à des instants aléatoires.

**11.** - Système selon la revendication 10 **caractérisé en ce que** le moyen d'atténuation aléatoire du signal S$_r$ est un générateur pseudo-aléatoire cryptographique (25) et/ou un générateur physique d'aléa.

**12.** - Système selon la revendication 9 **caractérisé en ce qu'**il comporte un premier moyen (30) de séparation du signal oscillateur S$_{OL2}$ en un premier signal l$_i$ et un deuxième signal l'$_i$, un dispositif (31) adapté à introduire un retard $\tau$ au deuxième signal l'$_i$ pour générer R$_i$, un deuxième coupleur (32) ayant une sortie reliée au détecteur cohérent (16).

**13.** - Système selon la revendication 9 **caractérisé en ce qu'**il comporte un moyen (40) de séparation du signal oscillateur local en une première fraction P$_1$ et une deuxième fraction P$_2$, une première sortie (40a) dudit dispositif (40) étant reliée au détecteur cohérent (16) et une deuxième sortie (40b) dudit dispositif (40) étant reliée à un deuxième détecteur cohérent (41) ayant la ligne de signal non connectée.

**14.** - Système selon l'une des revendications 9 à 13 **caractérisé en ce que** le détecteur cohérent est un détecteur homodyne.

**Patentansprüche**

1. Verfahren zur Echtzeit-Ermittlung eines Photonenrauschwertes in kohärenten optischen Kommunikationsvorrichtungen, die zumindest einen Sender Alice und zumindest einen Empfänger Bob umfassen, wobei der Sender Alice die Impulse des Signals S und eines Lokaloszillators $S_{OL}$ an Bob überträgt, wobei der Lokaloszillator als Phasenreferenz dient, gegenüber der die Phase des Signals bestimmt wird, wobei die Impulse des Lokaloszillators vor den Signalimpulsen groß sind, wobei der Empfänger zumindest einen kohärenten Detektor (16) umfasst, **dadurch gekennzeichnet, dass** es zumindest die folgenden Schritte auf Ebene des Empfängers Bob beinhaltet:

   • mittels kohärenter Detektion für mehrere Impulse, Durchführung von Rauschmessungen für Impulse des Signals $S_r$, das dem Empfänger Bob bekannt ist und auf Ebene des Empfängers Bob in zumindest zwei Dämpfungsverhältnissen gedämpft wird und zwar einem ersten Wert $a_1$ und einem zweiten Dämpfungswert $a_2$,
   • Gruppierung der Messungen nach dem jeweils angewendeten Dämpfungsverhältnis $a_1$, $a_2$, um zumindest zwei Gruppen $G_k$, k=1,2 zu bilden, Berechnung der Schwankungen des bei den Messungen in diesen Gruppen ermittelten Rauschens $Vbm_k$, wobei $Vbm_k$ der Summe der Schwankung des Signalrauschens gleich $Vbs* a_k$ und der Schwankung des Photonenrauschens gleich Vbp entspricht, und Ermittlung der Schwankung des Signalrauschens Vbs und der Schwankung des Photonenrauschens Vbp ausgehend von den Schwankungen $Vbm_k$ der Messungen in diesen Gruppen $G_k$.

2. Verfahren nach Anspruch 1, **dadurch gekennzeichnet, dass** zwei Dämpfungsverhältnisse $a_1$ und $a_2$ verwendet werden und dass Vbs und Vbp unter Verwendung von:

$$Vbs = (Vbm_2 - Vbm_1) / (a_2 - a_1)$$

$$Vbp = Vbm_1 - Vbs * a_1$$

   berechnet werden, wobei $Vbm_1$ die Schwankung des Rauschens für die erste mit $a_1$ gedämpfte Gruppe und $Vbm_2$ die Schwankung des Rauschens für die Dämpfung $a_2$ ist.

3. Verfahren nach einem der Ansprüche 1 bis 2, **dadurch gekennzeichnet, dass** als Dämpfungswerte $a_1$=1 und $a_2$ = 1/2 oder $a_1$=1 und $a_2$=0 verwendet werden.

4. Verfahren nach einem der Ansprüche 1 bis 3, **dadurch gekennzeichnet, dass** jeder Impuls $I_i$ des Signals Sr im Empfänger Bob um einen Faktor $x_i$ = $a_1$ oder $a_2$ gedämpft wird, indem ein variables Signal-Dämpfungsmodul verwendet wird, das den anzuwendenden Dämpfungsfaktor $x_i$ erhält.

5. Verfahren nach Anspruch 4, **dadurch gekennzeichnet, dass** ein kryptographischer Pseudozufallszahlengenerator (25), der einen geheimen Wert verwendet, um die Dämpfungsfaktoren $x_i$ des Signals $S_r$ zu generieren, und/oder ein physikalischer Zufallszahlengenerator zum Einsatz kommt.

6. Verfahren nach einem der Ansprüche 1 bis 3, **dadurch gekennzeichnet, dass**:

   • der Lokaloszillator $S_{OL2}$, der vom Empfänger Bob empfangen wird, in einen ersten Impuls $I_i$ und einen zweiten Impuls $I'_i$, auf den eine Verzögerung $\tau$ angewendet wird, aufgetrennt wird
   • eine erste Serie Rauschmessungen ausgehend von den Impulsen $I_i$ des Lokaloszillators und vom Signal $S_r$ durchgeführt wird,
   • eine zweite Serie Rauschmessungen ausgehend von den verzögerten Impulsen $R_i$ des Lokaloszillators, der mit dem Vakuum interferiert, durchgeführt wird,
   • ausgehend von diesen beiden Messserien der Wert des Photonenrauschens bestimmt wird.

7. Verfahren nach einem der Ansprüche 1 bis 3, **dadurch gekennzeichnet, dass**:

   • das Lokaloszillatorsignal $S_{OL2}$ in einen ersten Anteil $P_1$ und einen zweiten Anteil $P_2$ aufgeteilt wird, wobei $P_1 + P_2 = 1$,
   • mit Hilfe einer ersten kohärenten Detektion, die das Signal empfängt, eine erste Rauschmessungsserie $y_i$

ausgehend vom ersten Anteil $P_1$ und vom Signal $S_r$ durchgeführt wird,

• mit Hilfe einer zweiten homodynen Detektion eine zweite Rauschmessungsserie $z_i$ ausgehend vom zweiten Anteil $P_2$ durchgeführt wird,

• ausgehend von diesen beiden Messserien der Wert des Photonenrauschens bestimmt wird.

**8.** Verfahren nach Anspruch 7, **dadurch gekennzeichnet, dass** die Werte $y_i$ durch eine erste homodyne Detektion, **gekennzeichnet durch** eine Effizienz e, und die Werte $z_i$, die dem Photonenrauschen Vbp' entsprechen, **durch** eine zweite homodyne Detektion mit einer Effizienz e' bestimmt werden und dass der Wert des Photonenrauschens Vbp, reduziert auf die erste homodyne Detektion, mit Vbp = $e/e'*P_1/P_2*$Vbp' bestimmt wird.

**9.** System zur Echtzeit-Ermittlung eines Photonenrauschwertes in kohärenten optischen Kommunikationsvorrichtungen, die zumindest einen Sender Alice und zumindest einen Empfänger Bob umfassen, wobei der Sender Alice die Impulse des Signals $S_e$ und eines Lokaloszillators $S_{OL}$ an Bob überträgt, wobei der Lokaloszillator als Phasenreferenz dient, gegenüber der die Phase des Signals bestimmt wird, wobei die Impulse des Lokaloszillators vor den Signalimpulsen groß sind, wobei der Empfänger Bob zumindest einen kohärenten Detektor (16) umfasst, **dadurch gekennzeichnet, dass** es zumindest die folgenden Elemente beinhaltet:

• ein Dämpfungsmittel (21), das geeignet ist, das vom Empfänger Bob empfangene Signal $S_r$ in zumindest zwei bekannten Dämpfungsverhältnissen zu dämpfen und zwar mit einem ersten Wert $a_1$ und einem zweiten Dämpfungswert $a_2$, der je nach Impuls variabel ist,

• ein Verarbeitungsmittel (26) für die Messungen, die zumindest vom kohärenten Detektor durchgeführt wurden, wobei das Verarbeitungsmittel (26) geeignet ist, um zumindest die nachstehenden Schritte auszuführen: Gruppierung der Messungen nach dem jeweils angewendeten Dämpfungsverhältnis $a_1$, $a_2$, um zumindest zwei Gruppen $G_k$, k=1,2 zu bilden, Berechnung der Schwankungen des bei den Messungen in diesen Gruppen ermittelten Wertes $Vbm_k$, wobei $Vbm_k$ der Summe der Schwankung des Signalrauschens gleich Vbs* $a_k$ und der Schwankung des Photonenrauschens gleich Vbp entspricht, und Ermittlung der Schwankung des Signalrauschens Vbs und der Schwankung des Photonenrauschens Vbp ausgehend von den Schwankungen $Vbm_k$ der Messungen in diesen Gruppen $G_k$.

**10.** System nach Anspruch 9, **dadurch gekennzeichnet, dass** das Dämpfungsmittel für das Signal $S_r$ ein variables Dämpfungsmittel (21) ist, die zu zufallsbestimmten Zeitpunkten Dämpfungsaufträge erhält.

**11.** System nach Anspruch 10, **dadurch gekennzeichnet, dass** es sich bei dem zufallsgesteuerten Dämpfungsmittel für das Signal $S_r$ um einen kryptographischen Pseudozufallszahlengenerator (25) bzw. einen physikalischen Zufallszahlengenerator handelt.

**12.** System nach Anspruch 9, **dadurch gekennzeichnet, dass** es ein erstes Mittel (30) zum Auftrennen des Oszillatorsignals $S_{OL2}$ in ein erstes Signal $I_i$ und ein zweites Signal $I'_i$, eine geeignete Vorrichtung (31) zur Anwendung einer Verzögerung $\tau$ auf das zweite Signal $I'_i$ zur Schaffung von $R_i$, sowie einen zweiten Koppler (32) mit einem Ausgang, der an den kohärenten Detektor (16) angeschlossen ist, umfasst.

**13.** System nach Anspruch 9, **dadurch gekennzeichnet, dass** es ein Mittel (40) zum Auftrennen des Signals des Lokaloszillators in einen ersten Anteil $P_1$ und einen zweiten Anteil $P_2$ umfasst, wobei ein erster Ausgang (40a) der Vorrichtung (40) mit dem kohärenten Detektor (16) und ein zweiter Ausgang (40b) der Vorrichtung (40) mit einem zweiten kohärenten Detektor (41) verbunden ist, dessen Signalleitung nicht angeschlossen ist.

**14.** System nach einem der Ansprüche 9 bis 13, **dadurch gekennzeichnet, dass** es sich beim kohärenten Detektor um einen homodynen Detektor handelt.

**Claims**

**1.** A method for the real-time determination of a photon noise value in coherent optical communication devices comprising at least one transmitter Alice and at least one receiver Bob, said transmitter Alice transmitting the pulses of the signal S and a local oscillator $S_{OL}$ to Bob, said local oscillator acting as a phase reference against which the phase of the signal is defined, the local oscillator pulses being large before the signal pulses, said receiver comprising at least one coherent detector (16), **characterised in that** it comprises at least the following steps of, with respect to said receiver Bob:

• carrying out noise measurements, by coherent detection and for a plurality of pulses, for pulses of the signal $S_r$ that are known to said receiver Bob and are attenuated at said receiver Bob for at least two attenuation ratios, a first value $a_1$ and a second attenuation value $a_2$;
• grouping the measurements according to the attenuation ratio $a_1$, $a_2$ that is applied thereto so as to form at least two groups $G_k$, k=1, 2, computing the variances of the measured noise $Vbm_k$ of the measurements on these groups, with $Vbm_k$ being equal to the sum of the signal noise variance equal to $Vbs^* a_k$ and of the photon noise variance equal to Vbp, and determining the signal noise variance Vbs and the photon noise variance Vbp on the basis of the variances $Vbm_k$ of the measurements on these groups $G_k$.

2. The method according to claim 1, **characterised in that** two attenuation ratios $a_1$ and $a_2$ are used and Vbs and Vbp are computed using:

$$Vbs = (Vbm_2 - Vbm_1) / (a_2 - a_1)$$

$$Vbp = Vbm_1 - Vbs^*a_1$$

with $Vbm_1$ being the noise variance for the first group attenuated with $a_1$ and $Vbm_2$ being the noise variance for the attenuation $a_2$.

3. The method according to any one of claims 1 to 2, **characterised in that** the following are used as attenuation values: $a_1 = 1$ and $a_2 = \frac{1}{2}$ or $a_1 = 1$ and $a_2 = 0$.

4. The method according to any one of claims 1 to 3, **characterised in that** each pulse $I_i$ of said signal $S_r$ is attenuated by a factor $x_i = a_1$ or $a_2$ in said receiver Bob using a variable signal attenuation module that receives the attenuation factor $x_i$ to be applied.

5. The method according to claim 4, **characterised in that** a cryptographic pseudo-random generator (25) is used using a secret value so as to generate the attenuation factors $x_i$ of said signal $S_r$ and/or a physical random generator is used.

6. The method according to any one of claims 1 to 3, **characterised in that**:

• the local oscillator $S_{OL2}$ received by said receiver Bob is split into a first pulse $I_i$ and a second pulse $I'_i$, to which a delay $\tau$ is applied;
• a first series of noise measurements is carried out on the basis of the pulses $I_i$ of said local oscillator and of said signal $S_r$;
• a second series of noise measurements is carried out on the basis of delayed pulses $R_i$ of said local oscillator that interfere with the vacuum;
• the value of the photon noise is determined on the basis of said two series of measurements.

7. The method according to any one of claims 1 to 3, **characterised in that**:

• the local oscillator signal $S_{OL2}$ is divided into a first fraction $P_1$ and a second fraction $P_2$, with $P_1 + P_2 = 1$;
• a first series of noise measurements $y_i$ is carried out on the basis of said first fraction $P_1$ and of said signal $S_r$ using a first coherent detection receiving the signal;
• a second series of noise measurements $z_i$ is carried out on the basis of said second fraction $P_2$ using a second homodyne detection;
• the value of the photon noise is determined on the basis of said two series of measurements.

8. The method according to claim 7, **characterised in that** the values $y_i$ are determined by a first homodyne detection **characterised by** an efficiency e, and the values $z_i$ corresponding to the photon noise Vbp' are determined by a second homodyne detection with an efficiency e' and the value of the photon noise Vbp brought to the first homodyne detection is determined with $Vbp = e/e'^*P_1/P_2^*Vbp'$.

9. A system for the real-time determination of a photon noise value in coherent optical communication devices comprising at least one transmitter Alice and at least one receiver Bob, said transmitter Alice transmitting the pulses of the signal $S_e$ and a local oscillator $S_{OL}$ to Bob, said local oscillator acting as a phase reference against which the phase of the signal is defined, the local oscillator pulses being large before the signal pulses, said receiver Bob comprising at least one coherent detector (16), **characterised in that** it comprises at least the following elements:

• an attenuation means (21) adapted to attenuate the signal $S_r$ received by said receiver Bob with at least two known attenuation ratios, a first value $a_1$ and a second attenuation value $a_2$ that is variable according to the pulse;
• a means (26) for processing measurements carried out by at least said coherent detector, said processing means (26) is adapted to execute at least the following steps: grouping the measurements according to the attenuation ratio $a_1$, $a_2$ that is applied thereto so as to form at least two groups $G_k$, k=1, 2, computing the variances $Vbm_k$ of the measurements on said groups, with $Vbm_k$ being equal to the sum of the signal noise variance equal to $Vbs* a_k$ and the photon noise variance equal to $Vbp$, and determining the signal noise variance $Vbs$ and the photon noise variance $Vbp$ on the basis of the variances $Vbm_k$ of the measurements on said groups $G_k$.

10. The system according to claim 9, **characterised in that** said means for attenuating said signal $S_r$ is a variable attenuation means (21) receiving the attenuation commands at random instants.

11. The system according to claim 10, **characterised in that** said means for randomly attenuating said signal $S_r$ is a cryptographic pseudo-random generator (25) and/or a physical random generator.

12. The system according to claim 9, **characterised in that** it comprises a first means (30) for splitting the oscillator signal $S_{OL2}$ into a first signal $I_i$ and a second signal $I'_i$, a device (31) adapted to introduce a delay $\tau$ on said second signal $I'_i$ so as to generate $R_i$, a second coupler (32) having an output connected to said coherent detector (16).

13. The system according to claim 9, **characterised in that** it comprises a means (40) for dividing the local oscillator signal into a first fraction $P_1$ and a second fraction $P_2$, a first output (40a) of said device (40) being connected to said coherent detector (16) and a second output (40b) of said device (40) being connected to a second coherent detector (41) having the non-connected signal line.

14. The system according to any one of claims 9 to 13, **characterised in that** said coherent detector is a homodyne detector.

FIG.1

FIG.2

rapport d'atténuation $a_i$

récepteur Bob

21

16

$S_r$

signal

atténuation variable

20

15

signal

OL

$I_i$

$I'_i$

30

32

$R_i$

31

$y_i$

26

## FIG.3A

$I_i$       $R_i$       $I_{i+1}$

intensité
oscillateur local

temps

intensité
signal

$S_r$      ?

temps

atténuation

1      0      1

temps

$t_i$      $t_d$

## FIG.3B

16

récepteur Bob

40a

Signal Sr

15

signal

OL

coupleur

oscillateur local

40

40b

$S_{OL2}$

non connecté

OL

41

$y_i$

$z_i$

26

FIG.4

**EP 2 793 425 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1825633 A

- US 20040109564 A

**Littérature non-brevet citée dans la description**

- **P.YUEN et al.** Noise in homodyne and heterodyne détection. *OPTICS LETTERS,* 01 Mars 1983, vol. 8 (3), ISSN 0146-9592, 177